# FASCICULE DE BREVET EUROPEEN

(11) **EP 0 382 919 B1**
(45) Date de publication et mention de la délivrance du brevet: **24.11.1993**
(21) Numéro de dépôt: 89122870.2
(22) Date de dépôt: 12.12.1989
(51) Int. Cl.: B23P 13/00, A63B 53/04, A63B 53/14

(54) **Procédé de réalisation d'un produit fini comportant au moins une face munie d'une pluralité d'alvéoles, tel qu'une tête ou une poignée de golf; produit semi-fini pour la mise en oeuvre de ce procédé et produit fini susceptible d'être obtenu par mise en oeuvre de ce procédé**
Herstellungsverfahren eines Produktes mit wenigstens einer Oberfläche mit mehreren Löchern, wie ein Golfschlägerkopf oder -griff, Halbprodukt und mit diesem Verfahren hergestelltes Produkt
Method of producing a product having at least one surface containing a plurality of holes, such as a golf club head or grip, semi-product for carrying out this method and finished product

(30) Priorité: 15.02.1989 FR 8901975
(43) Date de publication de la demande: 22.08.1990
(73) Titulaire: Taylor Made Golf Company, Inc, Carlsbad, CA 92009 (US)
(72) Inventeur: Desbiolles, Jacques, F-74000 Annecy (FR); Gasquet, Denis, F-74000 Annecy (FR)
(74) Mandataire: Turlèque, Clotilde

(56) Documents cités:
- US-A- 1 695 476
- US-A- 3 640 028

## Description

La présente invention concerne un procédé de réalisation d'une tête de club de golf comportant au moins une face (5, 205) munie d'une pluralité d'alvéoles (6, 206) dont chacune présente à sa jonction avec ladite face (5, 205), un contour respectif (7, 207) de forme et dimensions respectives sensiblement déterminées par la succession des étapes consistant à :
a) réaliser un produit semi-fini métallique (10, 16) par moulage comportant une ébauche (13, 113) de ladite face (5), munie d'ébauches respectives (15, 115) desdites alvéoles (6, 106), puis
b) usiner ladite ébauche de face (13, 113) par enlèvement de matière pour réaliser ledit produit fini (1).

La présente invention concerne également un procédé pour la réalisation d'un produit semi-fini métallique pour la fabrication d'une tête de club de golf. On peut citer la tête d'un club de golf que, sur certaines de ses faces autres que sa face de frappe destinée à venir au contact d'une balle, l'on munit d'alvéoles dans un souci de recherche esthétique et que l'on réalise par moulage d'un produit semi-fini généralement métallique, présentant l'ébauche desdites faces munies d'ébauches respectives des alvéoles, puis finition manuelle de ce produit semi-fini par abrasion d'une part pour en éliminer toute bavure ou autre trace de moulage et d'autre part pour assurer une répartition recherchée des masses.

Le plus souvent, les alvéoles et leurs ébauches présentent la forme de calottes sphériques, dont la jonction respectivement avec la face correspondante du produit fini et avec l'ébauche de cette face sur le produit semi-fini présente un contour circulaire, et on cherche généralement à obtenir un contour circulaire identique, c'est-à-dire de même diamètre, pour les différentes alvéoles du produit fini, ainsi qu'une même profondeur de ces alvéoles par rapport à la face correspondante de ce produit.

A cet effet, généralement, on donne également aux ébauches respectives des alvéoles une forme identique, c'est-à-dire notamment un même contour, avec un même diamètre, à leur jonction avec l'ébauche de face correspondante sur le produit semi-fini, ainsi qu'une profondeur identique en référence à cette ébauche de face.

Ensuite, on pratique l'usinage de cette ébauche de face par meulage, ponçage ou polissage, c'est-à-dire de façon plus générale par enlèvement de matière, le plus souvent en tenant le produit semi-fini à la main dans la mesure où l'on ne dispose d'aucune surface de référence permettant d'effectuer un usinage sur machine-outil.

Le caractère manuel de cet usinage de finition a pour résultat une plus ou moins grande profondeur d'enlèvement de matière suivant les zones de l'ébauche de face comportant les ébauches d'alvéoles si bien que, suivant que l'enlèvement de matière s'est effectué sur une profondeur plus ou moins importante, il subsiste sur le produit fini des alvéoles en forme de calottes sphériques de profondeur variable, c'est-à-dire également de diamètre variable au niveau de leur contour circulaire de jonction avec la face correspondante du produit fini, résultant d'un usinage plus ou moins profond autour des différentes ébauches d'alvéoles initialement identiques.

Il en résulte une apparence irrégulière, c'est-à-dire inesthétique, des alvéoles sur chaque produit ; il en résulte en outre que chaque produit est esthétiquement différent des autres ; globalement, les produits paraissent inélégants et mal finis alors qu'au contraire, leur aspect résulte d'une finition particulièrement soignée, à la main.

Le but de la présente invention est de remédier à cet inconvénient en proposant notamment un procédé permettant d'aboutir à la réalisation d'alvéoles sensiblement identiques même si la profondeur d'usinage, par enlèvement de matière, de l'ébauche de la face qui comporte les ébauches de ces alvéoles varie légèrement d'une zone de cette ébauche de face à une autre zone de celle-ci.

A cet effet, le procédé selon l'invention, du type indiqué en préambule, se caractérise en ce que l'on estime, préalablement à l'étape a), une profondeur maximale respective probable d'usinage de ladite ébauche de face par enlèvement de matière au niveau de chaque ébauche d'alvéole et en ce que l'on réalise chacune desdites ébauches d'alvéole, lors de l'étape a), sous forme d'un trou borgne présentant un fond concave et une zone sensiblement cylindrique d'axe localement sensiblement perpendiculaire à ladite ébauche de face, ledit fond et ladite zone présentant un contour sensiblement identique audit contour respectif perpendiculairement audit axe et ladite zone raccordant ledit fond à ladite ébauche de face et présentant suivant ledit axe une profondeur sensiblement égale à ladite profondeur maximale respective probable.

On comprend aisément qu'ainsi, l'usinage par enlèvement de matière ne concerne, au niveau de chaque ébauche d'alvéole, que la zone sensiblement cylindrique de celle-ci si bien qu'après l'usinage, chacune des alvéoles obtenues présente ledit contour respectif à sa jonction avec la face correspondante du produit fini, quelle que soit la profondeur sur laquelle la matière a été enlevée autour de chaque ébauche d'alvéole dans les limites de la profondeur maximale respective probable.

Naturellement, le terme "cylindrique" doit être considéré dans son acception la plus large, signifiant la référence à tout volume délimité par une droite parallèle à l'axe de l'ébauche d'alvéole considérée et se déplaçant le long dudit contour respectif ; en particulier, ce contour peut être circulaire, auquel cas le fond de chaque trou borgne présente la forme d'une calotte sensiblement sphérique centrée sur l'axe de cette ébauche d'alvéole et la zone sensiblement cylindrique de cette ébauche d'alvéole est sensiblement cylindrique de révolution autour de cet axe, mais ce contour peut également présenter toute autre forme, et par exemple une forme polygonale, régulière ou non, auquel cas le fond de chaque trou borgne présente la forme d'une pyramide axée sur l'axe de ce trou borgne.

Par "sensiblement cylindrique", on entend non seulement une forme rigoureusement cylindrique telle qu'elle vient d'être définie, mais également une forme ne différant d'une forme cylindrique que par un léger évasement vers l'ébauche de face présentant des ébauches d'alvéoles, par exemple dans les limites seulement nécessaires à une réalisation des ébauches d'alvéoles par moulage au moyen d'éléments insérés dans une cavité de moulage du produit semi-fini, puis retrait de ces éléments, selon un procédé connu en lui-même dans le domaine du moulage de telle sorte que l'usinage sur une profondeur plus ou moins importante dans les limites de la profondeur maximale probable ne se traduise pas par une différence visuellement sensible dans les dimensions du contour des différentes alvéoles à leur jonction avec la face correspondante du produit fini.

Dans la mesure où la mise en oeuvre du procédé selon l'invention implique la réalisation d'un produit semi-fini original en lui-même, la présente invention s'étend également à ce produit semi-fini, comportant au moins une ébauche de face munie d'ébauches d'alvéoles et caractérisé en ce que chaque ébauche d'alvéole est constituée par un trou borgne présentant un fond concave et une zone sensiblement cylindrique d'axe localement sensiblement perpendiculaire à ladite ébauche de face, ledit fond et ladite zone présentant sensiblement un même contour respectif perpendiculairement audit axe et ladite zone raccordant ledit fond à ladite ébauche de face et présentant suivant ledit axe une profondeur sensiblement égale à une profondeur maximale respective probable d'usinage de ladite ébauche de face par enlèvement de matière.

D'autres caractéristiques et avantages de la présente invention ressortiront de la description ci-dessous, relative à un mode de mise en oeuvre non limitatif, ainsi que des dessins annexés qui font partie intégrante de cette description.
- Les figures 1 à 3 montrent des vues en perspective d'une tête de club de golf, à titre d'exemple non limitatif de produit fini susceptible d'être réalisé conformément à la présente invention, c'est-à-dire présentant des alvéoles réparties sur l'une de ses faces.
- La figure 4 montre, en une vue en coupe par un plan localement perpendiculaire à cette face, la forme de l'une de ces alvéoles lorsqu'elle est réalisée par un procédé de l'Art antérieur.
- Les figures 5 et 6 illustrent, en des vues en perspective, deux étapes successives de réalisation d'un produit semi-fini, c'est-à-dire d'une ébauche de tête de club de golf, conformément à ce procédé de l'Art antérieur.
- La figure 7 illustre l'usinage manuel de cette ébauche conformément à l'Art antérieur.
- Les figures 8 et 9 montrent, en des vues en perspective, deux exemples de tête de club de golf obtenue par ce procédé conforme à l'Art antérieur et présentant des défauts caractéristiques de celui-ci.
- La figure 10 montre une ébauche d'alvéole d'une ébauche de tête de club de golf réalisée puis usinée conformément à l'Art antérieur, en une vue en coupe par un plan localement perpendiculaire à la face correspondante de cette ébauche de tête de club de golf.
- Les figures 11 et 12 montrent, en des vues analogues à celle de la figure 10, deux exemples de forme d'ébauche d'alvéole sur une ébauche de tête de club de golf réalisée conformément à la présente invention, à titre de produit semi-fini.
- La figure 13 montre, en une vue en perspective, une autre forme d'ébauche d'alvéole, destinée à la réalisation d'alvéole présentant des formes différentes de la forme qui apparaît aux figures 1 à 3.
- La figure 14 montre, en une vue en perspective, une poignée de club de golf à titre d'autre exemple non limitatif de produit fini susceptible d'être réalisé conformément à la présente invention.

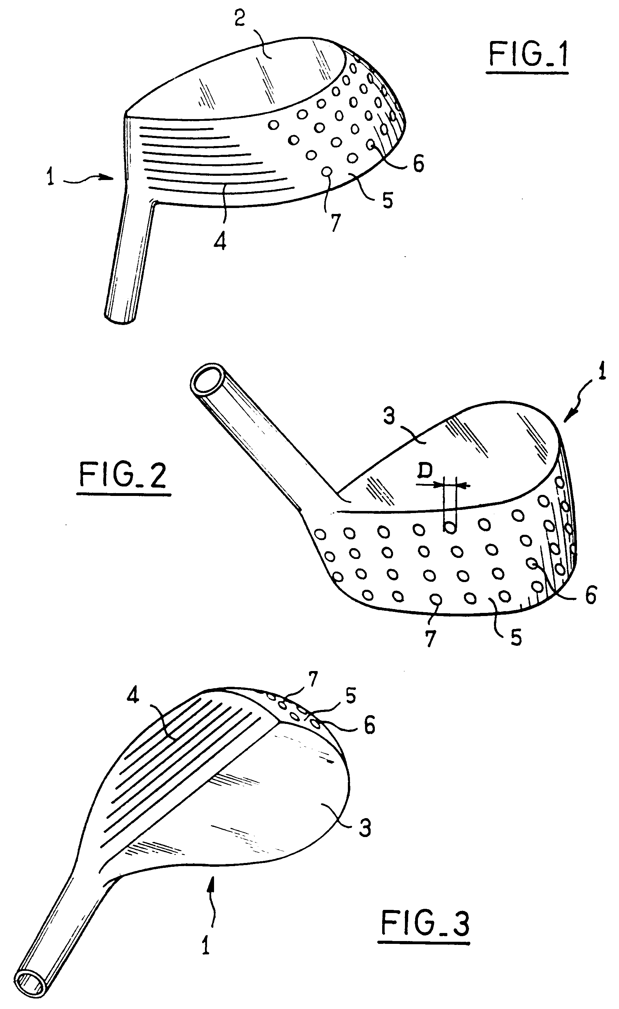

On se réfèrera en premier lieu aux figures 1 à 3, où l'on a illustré une tête 1 de club de golf présentant notamment une semelle 2 tournée vers le bas lors de l'impact de la tête 1 contre une balle, une face 3 placée en position supérieure si l'on se réfère à cette position de la tête 1, une face de frappe 4 destinée à venir frapper la balle et raccordant mutuellement, localement, la semelle 2 et la face supérieure 3, et une face périphérique 5 raccordant mutuellement la semelle 2 et la face supérieure 3 en complément de la face de frappe 4 ; dans un but esthétique, cette face périphérique 5 est munie d'une pluralité d'alvéoles 10 disposées suivant un motif déterminé mais librement choisi et présentant à leur jonction avec la face 5 des contours respectifs de forme et dimensions respectives sensiblement déterminées, à savoir dans l'exemple non limitatif illustré des contours circulaires 7 identiques, c'est-à-dire de même diamètre D.

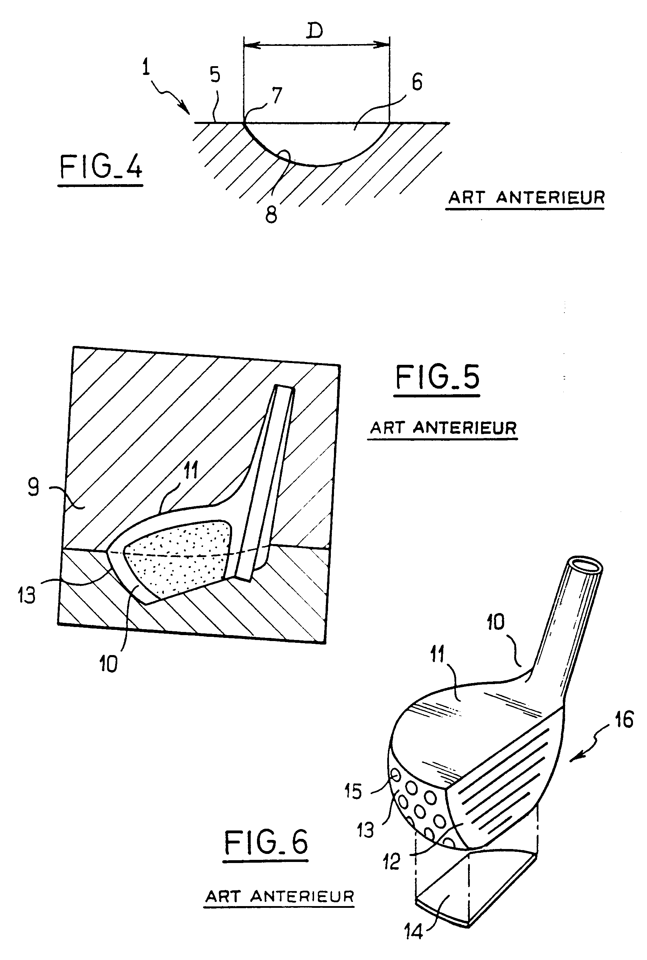

Antérieurement à la présente invention et comme le montre la figure 4, on a toujours cherché à réaliser de telles alvéoles 6 présentant le même contour circulaire 7 à leur jonction avec la face périphérique 5 de la tête 1 de club de golf en leur donnant rigoureusement la forme d'une calotte sphérique concave 8, ce qui conduit à de grandes difficultés dans l'obtention de contours 7 rigoureusement identiques si l'on tient compte de la façon dont est habituellement réalisée une tête 1 de club de golf et qui va être à présent rappelée en référence aux figures 5 à 7.

Au cours d'une première étape de cette fabrication, illustrée à la figure 5, on réalise par moulage, dans un moule 9 formé d'un assemblage de plusieurs parties, une ébauche 10 de tête de club de golf, présentant les ébauches respectives 11, 12, 13 des faces 3, 4, 5 mais ne comportant pas la semelle 2 qui, comme le montre la figure 6, est ensuite rapportée de façon solidaire, sous forme d'une ébauche 14, sur l'ébauche 10 après démoulage de cette dernière.

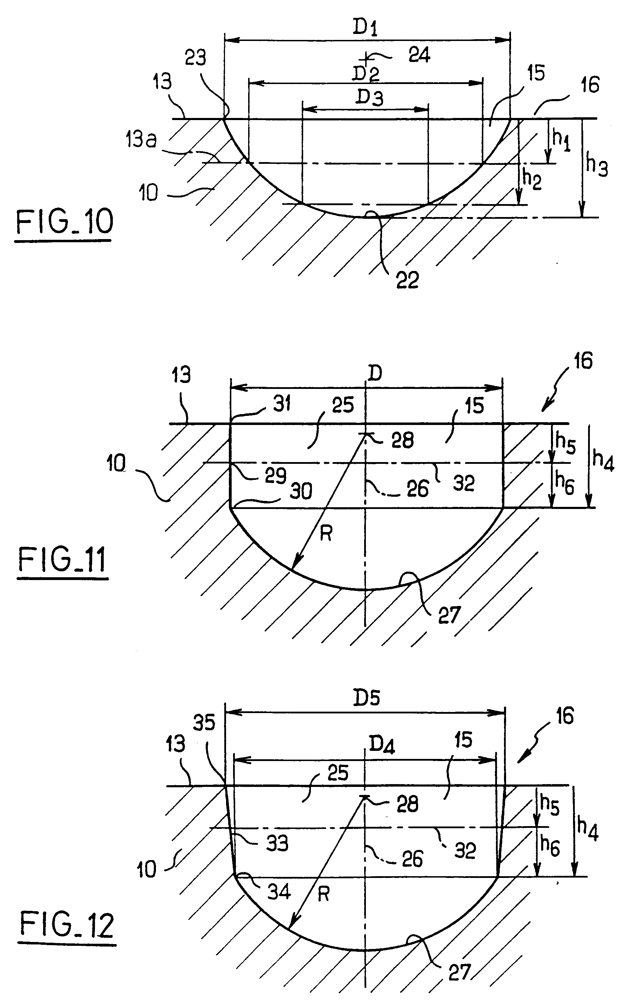

Lors du moulage illustré à la figure 5 et grâce à une conception appropriée du moule 9, on réalise dans l'ébauche 13 de la face 5 des ébauches d'alvéoles 15 dont l'une est plus particulièrement visible à la figure 10 et dont chacune, lorsqu'il s'agit de réaliser des alvéoles 6 en forme de calotte sphérique 8, présente elle-même la forme d'une calotte sphérique 22 ; lorsque les alvéoles 6 doivent être identiques et que leur contour 7 à leur jonction avec la face 5 de la tête de golf 1 doit être circulaire et de même diamètre D, les ébauches 15 sont elles-mêmes identiques et chacune d'entre elles présente elle-même à son intersection avec l'ébauche 13 de la face 5 un contour 23 circulaire, de même diamètre D₁ supérieur au diamètre D du contour 7, d'une valeur déterminée compte tenu de phénomènes survenant lors d'une opération ultérieure d'usinage par enlèvement de matière, que l'on pratique sur le produit semi-fini 16 résultant de l'assemblage de l'ébauche 14 de semelle à l'ébauche 10 de tête de club de golf illustrée à la figure 10.

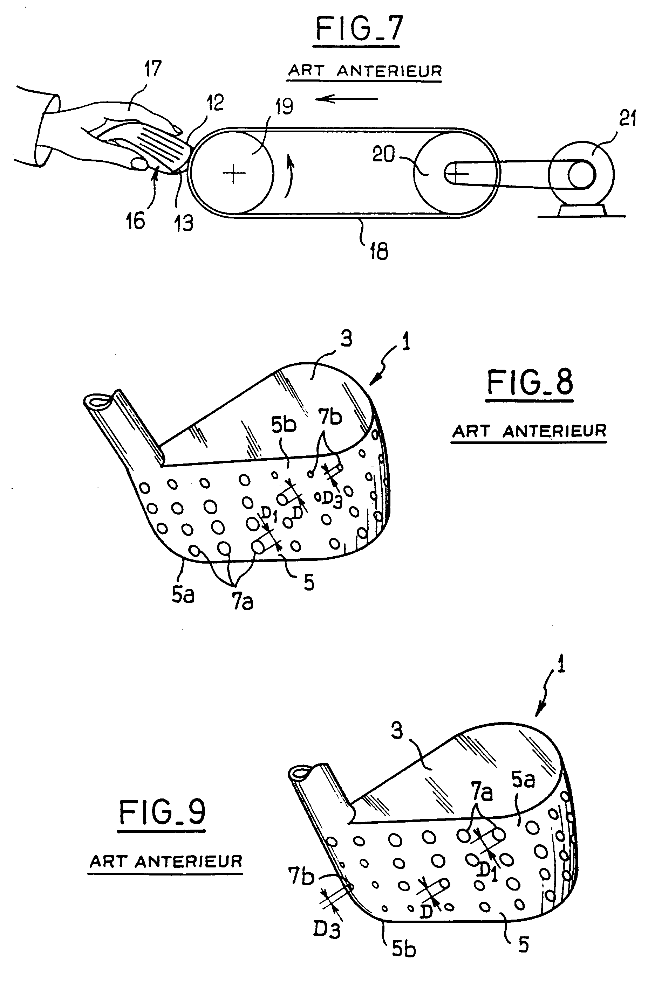

Au cours de cette opération d'usinage, illustrée à la figure 7, on tient le produit semi-fini 16 à la main 17 pour en présenter notamment l'ébauche 12 de la face de frappe et l'ébauche 13 de la face périphérique à une bande abrasive mobile 18, se présentant par exemple sous la forme d'une bande sans fin circulant sur elle-même autour de deux rouleaux 19 20 dont l'un est mû à la rotation sur lui-même par un moteur 21, pour éliminer par abrasion toute trace de moulage comme par exemple les bavures résultant de la jonction entre les différentes parties du moule 9 et les traces des carottes de moulage convenablement sectionnées au préalable, de façon non représentée mais bien connue d'un Homme du métier ; cette opération peut également servir à équilibrer soigneusement les masses dans la tête 1 ainsi fabriquée.

Naturellement, l'opération d'usinage par enlèvement de matière illustrée à la figure 7 peut être pratiquée par des moyens autres qu'une bande abrasive sans fin 18, et par exemple au moyen d'une meule rotative, ou encore de tout autre moyen propre à effectuer un meulage, un ponçage ou un polissage, ou par une présentation successive du produit semi-fini 16 à différents moyens propres à en assurer une finition de plus en plus fine, pour aboutir au produit fini désiré, à savoir la tête 1.

Dans l'ébauche 13 de la face périphérique 5 de la tête 1, l'enlèvement de matière résultant de l'opération illustrée à la figure 7 se traduit au niveau de chaque ébauche 15 d'alvéole 6 par une réduction du diamètre de son contour 16 à sa jonction avec l'ébauche de face 13 comme le montre la figure 10. En effet, en raison de la forme en calotte sphérique 22 de l'ébauche d'alvéole 15, étant entendu que le centre 24 de la sphère non référencée correspondant à cette calotte sphérique 22 est décalé vers l'extérieur de l'ébauche d'alvéole 15 par rapport à l'ébauche de face 13, l'enlèvement de matière autour d'une ébauche d'alvéole 15 déterminée, sur une profondeur h₁ perpendiculairement à la face 13, pour amener celle-ci à un niveau 13a, se traduit par une réduction du diamètre du contour 23 de la valeur D₁ à une valeur D₂, et l'enlèvement de matière sur une profondeur h₂ définie comme h₁ mais supérieure à h₁ se traduit par le passage du diamètre du contour 23 à une valeur encore inférieure D₃.

Naturellement, c'est en fonction du diamètre D à obtenir et d'une profondeur probable d'enlèvement de matière qu'est calculé le diamètre D₁ du contour 23 de l'ébauche d'alvéole 15 à sa jonction avec l'ébauche de face 13, de telle sorte qu'après l'opération d'usinage illustrée à la figure 7, le diamètre D₁ soit ramené au diamètre D effectivement choisi, lorsque ne subsiste de l'ébauche d'alvéole 15 que l'alvéole 6 à réaliser.

Toutefois, on constate qu'une faible différence entre la profondeur effective d'usinage autour d'une ébauche d'alvéole 15 déterminée et la profondeur estimée en fonction de laquelle a été choisi le diamètre D₁ peut entraîner une différence importante entre le diamètre effectivement communiqué au contour 7 de l'alvéole 6 correspondante et le diamètre D souhaité ; ainsi, si par exemple h₁ correspond à la profondeur d'usinage en fonction de laquelle a été déterminé le diamètre D₁, afin qu'après un enlèvement de matière sur cette profondeur h₁, le diamètre du contour 23 de l'ébauche 15 soit amené à une valeur D₂ égale à la valeur désirée D, il suffit que la profondeur d'enlèvement de matière autour de l'ébauche d'alvéole 15 concernée s'effectue sur la profondeur h₂ au lieu de la profondeur h₁ pour que l'alvéole 6 présente à son contour 7 le diamètre D₃ fortement inférieur à D₂, et il suffit que l'ébauche de face 13 soit à peine entamée par l'enlèvement de matière autour de l'ébauche d'alvéole 15 considérée pour que le contour 7 de l'alvéole 6 obtenue présente le diamètre D₁ supérieur du diamètre D recherché.

Or, de tels phénomènes ont de fortes probabilités de se produire si l'on tient compte de ce que le produit semi-fini 16 est tenu à la main 17 lors de l'usinage par enlèvement de matière et, naturellement, la probabilité est importante pour que ce phénomène apparaisse à des degrés divers dans différentes zones de l'ébauche de face 13, avec pour conséquence un aspect irrégulier et disgracieux des alvéoles 6 sur la face périphérique 5 de la tête de golf 1.

Les figures 8 et 9 montrent des exemples typiques d'irrégularités dans l'aspect des alvéoles 6 obtenues ; alors que ces alvéoles 6 devraient présenter un contour 7 identique, c'est-à-dire de même diamètre prédéterminé D, le contour 7a de certaines de ces alvéoles, localisé dans des zones 5a de la face 5, présente un diamètre supérieur à D par exemple égal à D₁, ces zones 5a constituant en fait des restes de l'ébauche de face 13, alors que les contours 7b d'alvéoles situées dans d'autres zones 5b trop fortement usinées de la face 5 présentent un diamètre largement inférieur au diamètre D, et par exemple égal à D₃, et les diamètres des contours des alvéoles varient dans le sens d'une décroissance progressive des alvéoles situées dans les zones 5a vers les alvéoles situées dans les zones 5b, en ne passant par la valeur recherchée D qu'au niveau de quelques alvéoles localisées entre les zones 5a et les zones 5b ; à la limite, dans certaines zones 5b, l'enlèvement de matière peut atteindre une profondeur supérieure à une profondeur initiale h₃ des ébauches d'alvéole 15, mesurée localement perpendiculairement à l'ébauche de face 13, auquel cas toute trace d'alvéole disparaît dans ces zones.

L'examen des figures 8 et 9 montre combien une tête de club de golf 1 ainsi réalisée est inesthétique.

Pour remédier à cet inconvénient, la présente invention propose une solution illustrée aux figures 11 et 12 à propos de la fabrication d'une tête 1 de club de golf du type décrit en référence aux figures 1 à 3, c'est-à-dire d'une tête de club de golf présentant sur une face périphérique 5 des alvéoles 6 présentant à leur jonction avec cette face périphérique 5 des contours respectifs sensiblement circulaires, de même diamètre D étant bien entendu que la présente invention peut trouver son application dans le cas de toute autre forme de contour, et dans tout cas où l'on désire que les contours présentent des dimensions identiques ou des dimensions différentes dès lors qu'elles sont déterminées.

Conformément à la présente invention, on commence par réaliser par exemple par un procédé analogue à celui qui a été décrit précédemment, comportant successivement un moulage d'une ébauche de tête 10 et l'assemblage d'une ébauche de semelle 14 à cette ébauche de tête 10, un produit semi-fini 16 en tout point analogue à celui qui a été décrit à titre d'illustration de l'Art antérieur, à cette exception près que chaque ébauche 15 d'alvéole présente non pas la forme d'une calotte sphérique 22 comme on l'a décrit plus particulièrement en référence à la figure 10, mais une forme caractéristique de la présente invention et qui va être décrite à présent en référence aux figures 11 et 12.

Dans l'un et l'autre cas, l'ébauche d'alvéole 15 présente la forme d'un trou borgne 25 aménagé dans l'ébauche de face 13 de l'ébauche de tête 10 suivant un axe respectif 26 localement perpendiculaire à cette ébauche de face 13.

Ce trou borgne 25 comporte notamment un fond concave 27 qui, dans cet exemple non limitatif de mise en oeuvre de l'invention, présente la forme d'une calotte sensiblement sphérique présentant un centre 28 sur l'axe respectif 26 et, en référence à ce centre 28, un rayon R largement supérieur à la moitié du diamètre D que l'alvéole 6 correspondant doit présenter à sa jonction avec la face périphérique 5 de la tête de golf 1 ; dans l'exemple illustré à la figure 11, le trou borgne 25 comporte en outre une zone 29 cylindrique de révolution autour de l'axe 26 avec un diamètre égal au diamètre D ; la zone cylindrique 29 s'étend ainsi du fond 27 du trou borgne 25 jusqu'à l'ébauche de face 13 et présente ainsi aussi bien à sa jonction 30 avec le fond 27 qu'à sa jonction 31 avec l'ébauche de face 13, que lorsqu'elle est vue en coupe par un quelconque plan 32 perpendiculaire à l'axe 26, un contour identique, en forme et en dimensions, au contour 7 que l'alvéole correspondante 6 doit présenter à sa jonction avec la face périphérique 5 de la tête de golf 1. Dans le cas de l'exemple illustré à la figure 12, à la zone 29 est substituée une zone 33 tronconique de révolution autour de l'axe 26 et s'évasant d'une jonction 34 avec le fond 27 vers une jonction 35 avec l'ébauche de face 13, d'une quantité juste suffisante pour permettre une réalisation aisée du trou borgne 15 par moulage, lors d'une étape analogue à celle qui a été décrite en référence à la figure 5, grâce à des moyens aisément déterminables par un Homme du métier ; la zone 33 présente ainsi à ses jonctions 34 et 35 respectivement avec le fond 27 et avec l'ébauche de face 13, des formes circulaires de diamètres respectifs D₄ et D₅ approximativement égaux entre eux et au diamètre D du contour 7 de l'alvéole 6 à réaliser, si bien que l'on peut considérer avec une bonne approximation la zone 33 comme étant cylindrique de révolution autour de l'axe 26 avec un diamètre égal à D ; de même, dans un quelconque plan de coupe 32 perpendiculaire à l'axe 26, la zone 33 présente un contour circulaire de diamètre certes intermédiaire entre les diamètres D₄ et D₅, mais approximativement égal au diamètre D. On observera que le fait que le fond 27 présente en référence au centre 28 un rayon R largement supérieur à la moitié de D assure une jonction entre ce fond 27 et la zone 29 ou 33 du trou borgne 25, respectivement en 30 ou en 34, sous forme d'un cercle perpendiculaire à l'axe 26 et centré sur celui-ci.

Dans les deux exemples illustrés respectivement aux figures 11 et 12, la jonction 30, 34 du fond 27 du trou borgne 25 avec la zone cylindrique 29 ou sensiblement cylindrique 33 de ce trou borgne se trouve située, par rapport à l'ébauche de face 13, à une profondeur h₄, mesurée suivant l'axe 26, sensiblement égale à une profondeur maximale probable d'usinage de l'ébauche de face 13 autour de l'ébauche d'alvéole 15 considérée, et ceci pour chaque alvéole ; naturellement, selon qu'il est probable que l'ébauche de face 13 devra être usinée, par enlèvement de matière, sur une profondeur sensiblement uniforme ou sur une profondeur variant sensiblement suivant ses zones, la valeur h₄ peut être respectivement identique pour toutes les ébauches d'alvéole 15, ou différente d'une ébauche d'alvéole 15 à une autre, c'est-à-dire d'autant plus grande que la profondeur maximale d'usinage probable est importante.

De ce fait, une phase initiale de la réalisation d'une tête 1 de club de golf selon la présente invention consiste à concevoir la forme générale de l'ébauche 10 de cette tête et à estimer, au moins en ce qui concerne chacune des zones de l'ébauche 13 de la face périphérique 5 de la tête 1 devant présenter les alvéoles 6, quelle sera la profondeur maximale respective probable d'usinage par enlèvement de matière en tenant compte notamment du positionnement probable des bavures résultant du moulage et des carottes de coulée.

Ensuite, on réalise l'ébauche 10, présentant sur l'ébauche 13 de la face 5 les ébauches d'alvéole 15 réalisées en fonction de cette estimation soit conformément à la figure 11, soit conformément à la figure 12, puis on fixe l'ébauche de semelle 14 à l'ébauche de tête 10 ainsi conçue, par exemple par la succession des étapes décrites en référence aux figures 5 et 6.

Ensuite, on pratique l'opération d'usinage par enlèvement de matière décrite en référence à la figure 7, ou une opération analogue, aboutissant à un enlèvement de matière sur une profondeur plus ou moins importante autour de chaque ébauche d'alvéole 15, toutefois dans les limites de la valeur h₄ respectivement correspondante si cette dernière a été correctement estimée.

Dans ces conditions, si autour de l'ébauche de l'alvéole 15 illustrée à la figure 11 ou à la figure 12, l'usinage par enlèvement de matière ne donne lieu pratiquement à aucun enlèvement de matière, la face périphérique 5 de la tête 1 se confond pratiquement avec son ébauche 13, et l'alvéole 6 obtenue se confond elle-même pratiquement avec son ébauche 15, dont elle conserve le fond 27 et la zone 29 (figure 11) ou 33 (figure 12) pratiquement dans son intégralité, c'est-à-dire sur une profondeur sensiblement égale à sa profondeur d'origine h₄ ; par conséquent, l'alvéole 6 obtenue présente à son intersection avec la face 5 un contour coîncidant pratiquement avec le contour 31 (figure 11) ou 35 (figure 12), c'est-à-dire un contour circulaire d'un diamètre respectivement égal à D, ou égal à D₅ dont la différence par rapport à D est imperceptible visuellement ; si la profondeur d'enlèvement de matière, mesurée parallèlement à l'axe 26 en référence à l'ébauche de face 13, s'effectue sur une profondeur h₅ intermédiaire entre 0 et la profondeur maximale probable h₄, ce qui place la face périphérique 5 et son intersection avec l'alvéole 6 au niveau du plan 32, le diamètre de ce contour reste circulaire, et d'un diamètre respectivement égal à D (figure 11) ou à une valeur intermédiaire entre D₄ et D₅, et visuellement approximativement égale à D (figure 12); l'alvéole 6 obtenue présente alors la forme d'un trou borgne délimité d'une part par le fond 27 et d'autre part par une amorce, immédiatement adjacente à ce fond 27, de la zone 29 (figure 11) ou 33 (figure 12) sur une profondeur h₆ égale à la différence entre h₄ et la profondeur effective d'usinage h₅, parallèlement à l'axe 28 ; si, autour de l'ébauche d'alvéole 15 considérée, la profondeur d'usinage atteint la profondeur maximale h₄, l'amorce précitée de la zone 29 ou 33 disparait totalement ou, en d'autres termes, présente une profondeur nulle parallèlement à l'axe 28 et le contour 7 de l'alvéole 6 se confond avec la jonction circulaire 30 ou 34 de la zone 29 ou 33 de l'ébauche d'alvéole 15 avec le fond 27, c'est-à-dire présente une forme circulaire de diamètre égal à D (figure 11) ou à D₄ visuellement approximativement égal à D ; seul le fond 27 délimite alors l'alvéole 6.

Naturellement, le même phénomène se retrouve au niveau de l'ensemble des ébauches d'alvéole 15 si bien que, même si l'ébauche de face 13 est usinée sur des profondeurs différentes autour de ces différentes ébauches, le contour 7 des différentes alvéoles 6 qui en résultent sur la tête 1 finie présente, au moins en apparence, sensiblement le même diamètre recherché D, avec un résultat particulièrement esthétique. La profondeur h₄, et avec elle la profondeur de l'amorce de zone 29 ou 33 qui peut subsister après finition, peut généralement être maintenue suffisamment petite, en comparaison avec le diamètre D, pour que l'éventuelle subsistance d'une amorce de zone 29 ou 33 dans certaines alvéoles 6 reste pratiquement indiscernable visuellement.

Naturellement, le procédé d'usinage par enlèvement de matière utilisé pour réaliser la finition du produit semi-fini 16 notamment au niveau de l'ébauche de face 13 de l'ébauche de tête 10 est indifférent quant à l'obtention d'un tel résultat et peut consister en un procédé quelconque, étant entendu que la présente invention trouve plus particulièrement son application à la réalisation de pièces n'offrant aucune surface de référence en vue de la mise en oeuvre de cet usinage, si bien que celui-ci est généralement pratiqué par abrasion et notamment par meulage, ponçage ou polissage alors que le produit semi-fini est tenu à la main ; toutefois, on ne sortirait pas du cadre de la présente invention en réalisant des ébauches d'alvéole comme on l'a indiqué, sur un produit fini destiné à être usiné sur une machine-outil.

De même, bien que l'on ait décrit la présente invention dans le cas de la réalisation d'alvéoles présentant des contours circulaires à leur jonction avec la face correspondante du produit fini, on pourrait également réaliser conformément à la présente invention des alvéoles dont le contour ainsi défini présenterait une forme différente d'une forme circulaire, et par exemple une forme polygonale.

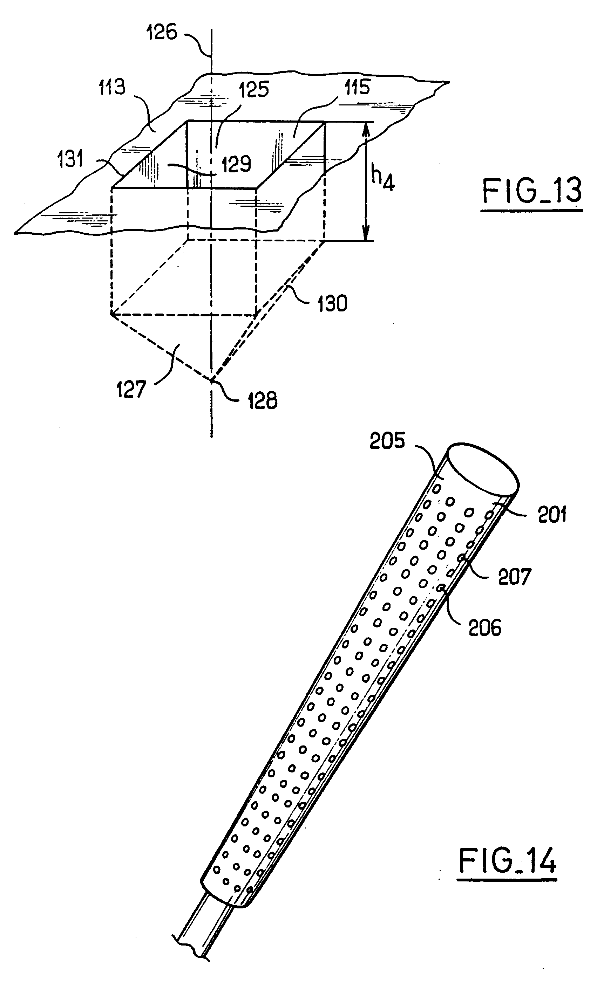

La figure 13 illustre précisément une ébauche 115 d'une alvéole destinée à présenter une forme carrée à son contour de jonction avec la face correspondante d'un produit fini.

A cet effet, l'ébauche d'alvéole 115, aménagée dans une ébauche de face 113 destinée à être usinée par enlèvement de matière, présente la forme d'un trou borgne 125 aménagé suivant un axe 126 localement perpendiculaire à cette ébauche de face 113.

Le trou borgne 125 comporte un fond pyramidal 127 présentant un sommet 128 sur l'axe 126 et, entre ce sommet 128 et la face 113, un contour de base 130 carré, centré sur l'axe 126, parallèle à l'ébauche de face 113 et situé à une profondeur h₄ de celle-ci, mesurée parallèlement à l'axe 26, laquelle profondeur h₄ est calculée comme il a été indiqué plus haut, en référence aux figures 11 et 12, en fonction d'une estimation d'une profondeur maximale probable d'usinage de l'ébauche de face 113 autour de l'ébauche d'alvéole 115 considérée.

De son fond 127 à l'ébauche de face 113, le trou borgne 125 présente une zone 129 cylindrique autour de l'axe 126, c'est-à-dire définie par des génératrices parallèles à cet axe 126 et prenant appui sur le contour 130 de telle sorte que la zone 129 du trou borgne 125 se raccorde à l'ébauche de face 113 selon un contour 131 identique au contour 130, c'est-à-dire carré, centré sur l'axe 126 et présentant les mêmes dimensions que le contour 130.

Les contours 130 et 131 sont choisis identiques au contour que doit présenter chaque alvéole à sa jonction avec la face correspondante.

On comprend aisément qu'également dans ce cas, un usinage de l'ébauche de face 113 par enlèvement de matière sur toute profondeur comprise entre 0 et h₄, mesurée parallèlement à l'axe 126, permet de communiquer à l'alvéole obtenue un contour identique aux contours 130 et 131, à sa jonction avec la face correspondante du produit fini.

Naturellement, de même que le mode de réalisation de la figure 12 peut être considéré comme une variante du mode de réalisation à la figure 11, le mode de réalisation de la figure 13 pourrait connaître une variante selon laquelle la zone cylindrique 129 du trou borgne 125 serait remplacée par une zone qui divergerait à partir du fond 127 de façon suffisante pour permettre une réalisation du trou borgne 125 par moulage, mais suffisamment faiblement pour que la différence de dimension qui en résulterait entre les contours 130 et 131 soit visuellement peu discernable.

De même, la tête de club de golf 1 illustrée aux figures 1 à 3 ne constitue pas le seul produit fini susceptible d'être réalisé conformement à la présente invention, et on a illustré à la figure 14, à titre d'autre exemple non limitatif de produit susceptible d'être réalisé conformément à la présente invention, une poignée 201 de club de golf, réalisée par moulage d'une ébauche en matière plastique puis usinage de cette ébauche par enlèvement de matière, par un procédé d'abrasion choisi dans un groupe comportant notamment le meulage, le ponçage et le polissage, laquelle poignée 201 présente sur une face périphérique 205 des alvéoles 206 dont les jonctions respectives avec la face 205 définissent des contours circulaires 207 mutuellement identiques, du moins en apparence, et par exemple circulaires et sensiblement du même diamètre.

La mise en oeuvre de l'invention en vue de la réalisation d'un tel produit peut être aisément déduite, par un Homme du métier, de la description qui précède.

## Revendications

1. Procédé de réalisation d'une tête de club de golf comportant au moins une face (5, 205) munie d'une pluralité d'alvéoles (6, 206) dont chacune présente à sa jonction avec ladite face (5, 205), un contour respectif (7, 207) de forme et dimensions respectives sensiblement déterminées par la succession des étapes consistant à :
a) réaliser un produit semi-fini métallique (10, 16) par moulage comportant une ébauche (13, 113) de ladite face (5), munie d'ébauches respectives (15, 115) desdites alvéoles (6, 106), puis
b) usiner ladite ébauche de face (13, 113) par enlèvement de matière pour réaliser ledit produit fini (1),
caractérisé en ce que l'on estime, préalablement à l'étape a), une profondeur maximale respective probable (h₄) d'usinage de ladite ébauche de face (13, 113) par enlèvement de matière au niveau de chaque ébauche d'alvéole (15, 115) et en ce que l'on réalise chacune desdites ébauches d'alvéole (15, 115), lors de l'étape a), sous forme d'un trou borgne (25, 125) présentant un fond concave (27, 127) et une zone (29, 33, 129) sensiblement cylindrique d'axe (26, 126) localement sensiblement perpendiculaire à ladite ébauche de face (13, 113), ledit fond (27, 127) et ladite zone (29, 39, 139) présentant un contour (30, 31, 34, 35, 130, 131) sensiblement identique audit contour respectif (7, 207) perpendiculairement audit axe (26, 126) et ladite zone (29, 33, 129) raccordant ledit fond (27, 127) à ladite ébauche de face (25, 125) et présentant suivant ledit axe (26, 126) une profondeur (h₄) sensiblement égale à ladite profondeur maximale respective probable (h₄).

2. Procédé selon la revendication 1, caractérisé en ce que lesdits contours (7, 30, 31, 34, 35, 130, 131, 207) sont identiques d'une ébauche d'alvéole (15, 115) à une autre.

3. Procédé selon l'une quelconque des revendications 1 et 2, caractérisé en ce que ladite profondeur (h₄) est identique d'une ébauche d'alvéole (15, 115) à une autre.

4. Procédé selon l'une quelconque des revendications 1 à 3, caractérisé en ce que lesdits contours (7, 30, 31, 34, 35, 207) sont circulaires et en ce que ledit fond (27) présente la forme d'une calotte sensiblement sphérique contrée sur ledit axe (26).

5. Procédé selon l'une quelconque des revendications 1 à 3, caractérisé en ce que lesdits contours (130, 131) sont polygonaux et en ce que ledit fond (127) présente la forme d'une pyramide axée sur ledit axe (126).

6. Procédé selon l'une quelconque des revendications 1 à 5, caractérisé en ce que l'on réalise ledit enlèvement de matière, lors de l'étape b), par un procédé d'abrasion choisi dans un groupe comportant le meulage, le ponçage et le polissage.

7. Procédé pour la réalisation d'un produit semi-fini métallique (10, 16) pour la fabrication d'une tête de club de golf selon le procédé selon l'une quelconque des revendications 1 à 6, comportant au moins une ébauche de face (13, 113) munie d'ébauches d'alvéoles (15, 115),
caractérisé en ce que chaque ébauche d'alvéole (15, 115) est constituée par un trou borgne (25, 125) présentant un fond concave (27, 127) et une zone (29, 33, 129) sensiblement cylindrique d'axe (26, 126) localement sensiblement perpendiculaire à ladite ébauche de face (13, 113), ledit fond (27, 127) et ladite zone (29, 33, 129) présentant sensiblement un même contour respectif (30, 31, 34, 35, 130, 131) perpendiculairement audit axe (26, 126) et ladite zone (29, 33, 129) raccordant ledit fond (27, 127) à ladite ébauche de face (13, 113) et présentant suivant ledit axe (26, 126) une profondeur (h₄) sensiblement égale à une profondeur maximale respective probable d'usinage de ladite ébauche de face (13, 113) par enlèvement de matière.

8. Procédé selon la revendication 7, caractérisé en ce que lesdits contours (30, 31, 34, 35, 130, 131) sont identiques d'une ébauche d'alvéole (15, 115) à une autre.

9. Procédé selon l'une quelconque des revendications 7 et 8, caractérisé en ce que ladite profondeur (h₄) est identique d'une ébauche d'alvéole (15, 115) à une autre.

10. Procédé selon l'une quelconque des revendications 7 à 9, caractérisé en ce que lesdits contours (30, 31, 34, 35) sont circulaires et en ce que ledit fond (27) présente la forme d'une calotte sensiblement sphérique contrée sur ledit axe (26).

11. Procédé selon l'une quelconque des revendications 7 à 9, caractérisé en ce que lesdits contours (130, 131) sont polygonaux et en ce que ledit fond (127) présente la forme d'une pyramide axée sur ledit axe (126).

## Claims

1. Method for producing a golf club head comprising at least one face (5, 205) provided with a plurality of dimples (6, 206), each of which has at its junction with the said face (5, 205) a respective contour (7, 207) of respective shape and dimensions substantially determined by the succession of steps consisting in:
a) producing a semi-finished metal product (10, 16) by moulding, comprising a blank (13, 113) for the said face (5), fitted with respective blanks (15, 115) for the said dimples (6, 106), then
b) working the said face blank (13, 113) by removing material in order to produce the said finished product (1),
characterized in that an estimation is made, prior to the step a), of a maximum respective probable depth (h₄) of working of the said face blank (13, 113) by removal of material at each dimple blank (15, 115), and in that each of the said dimple blanks (15, 115) is produced, during the step a), in the form of a blind hole (25, 125) having a concave bottom (27, 127) and a substantially cylindrical zone (29, 33, 129) of axis (26, 126) locally substantially perpendicular to the said face blank (13, 113), the said bottom (27, 127) and the said zone (29, 39, 139) having a contour (30, 31, 34, 35, 130, 131) substantially identical to the said respective contour (7, 207) perpendicularly to the said axis (26, 126), and the said zone (29, 33, 129) connecting the said bottom (27, 127) to the said face blank (25, 125) and having along the said axis (26, 126) a depth (h₄) substantially equal to the said maximum respective probable depth (h₄).

2. Method according to Claim 1, characterized in that the said contours (7, 30, 31, 34, 35, 130, 131, 207) are identical from one dimple blank (15, 115) to another.

3. Method according to either of Claims 1 and 2, characterized in that the said depth (h₄) is identical from one dimple blank (15, 115) to another.

4. Method according to any one of Claims 1 to 3, characterized in that the said contours (7, 30, 31, 34, 35, 207) are circular and in that the said bottom (27) has the shape of a substantially spherical cap countered [sic] on the said axis (26).

5. Method according to any one of Claims 1 to 3, characterized in that the said contours (130, 131) are polygonal and in that the said bottom (127) has the shape of a pyramid with its axis aligned on the said axis (126).

6. Method according to any one of Claims 1 to 5, characterized in that the said material is removed, during step b), by an abrasion process chosen from a group comprising grinding, sanding and polishing.

7. Method for producing a semi-finished metal product (10, 16) for manufacturing a golf club head according to the method according to any one of Claims 1 to 6, comprising at least one face blank (13, 113) fitted with dimple blanks (15, 115),
characterized in that each dimple blank (15, 115) consists of a blind hole (25, 125) having a concave bottom (27, 127) and a substantially cylindrical zone (29, 33, 129) of axis (26, 126) locally substantially perpendicular to the said face blank (13, 113), the said bottom (27, 127) and the said zone (29, 33, 129) having substantially the same respective contour (30, 31, 34, 35, 130, 131) perpendicularly to the said axis (26, 126), and the said zone (29, 33, 129) connecting the said bottom (27, 127) to the said face blank (13, 113) and having along the said axis (26, 126) a depth (h₄) substantially equal to a maximum respective probable depth of working of the said face blank (13, 113) by removal of material.

8. Method according to Claim 7, characterized in that the said contours (30, 31, 34, 35, 130, 131) are identical from one dimple blank (15, 115) to another.

9. Method according to either of Claims 7 and 8, characterized in that the said depth (h₄) is identical from one dimple blank (15, 115) to another.

10. Method according to any one of Claims 7 and 9, characterized in that the said contours (30, 31, 34, 35) are circular, and in that the said bottom (27) has the shape of a substantially spherical cap countered [sic] on the said axis (26).

11. Method according to any one of Claims 7 to 9, characterized in that the said contours (130, 131) are polygonal, and in that the said bottom (127) has the shape of a pyramid with its axis aligned on the said axis (126).

## Patentansprüche

1. Verfahren zur Herstellung eines Golfschlägerkopfes, der zumindestens eine Fläche (5, 205) aufweist, die mit einer Vielzahl von Zellen (6, 206) versehen ist, von denen jede an ihrer Verbindung mit der Fläche (5, 205) einen jeweiligen Umriß (7, 207) von einer Form und jeweiligen Ausmaßen vorzeigt, die im wesentlichen durch die Aufeinanderfolge der Schritte bestimmt ist, die bestehen aus:
a) Herstellen eines halbfertigen metallischen Produktes (10, 16) durch Formen, das einen Rohling (13, 113) der Fläche (5) aufweist, die mit jeweiligen Rohlingen (15, 115) der Zellen (6, 106) versehen ist, und dann
b) Bearbeiten des Rohlings der Fläche (13, 113) durch Entfernen von Material, um das Fertigprodukt (1) herzustellen,
**dadurch gekennzeichnet**, daß
man vor dem Schritt a, eine jeweilige wahrscheinliche maximale Tiefe (h₄) der Bearbeitung des Rohlings der Fläche (13, 113) durch Entfernen von Material auf dem Niveau jedes Zellenrohlings (15, 115) schätzt, und daß man jeden der Zellenrohlinge (15, 115) beim Schritt a (in Form eines unechten Loches 25, 125) realisiert, das einen konkaven Grund (27, 127) und eine im wesentlichen zylindrische Zone (29, 33, 129) mit einer Achse (26, 126) aufweist, die lokal im wesentlichen senkrecht zu dem Rohling der Fläche (13, 113) ist, wobei der Grund (27, 127) und die Zone (29, 39, 139) einen Umriß (30, 31, 34, 35, 130, 131) darstellen, der im wesentlichen identisch mit dem jeweiligen Umriß (7, 207) senkrecht zur Achse (26, 126) ist und wobei die Zone (29, 33, 129) den Grund (27, 127) mit dem Rohling der Fläche (25, 125) verbindet und folgend der Achse (26, 126) eine Tiefe (h₄) darstellt, die im wesentlichen gleich der jeweiligen maximalen wahrscheinlichen Tiefe (h₄) ist.

2. Verfahren gemäß Anspruch 1, dadurch gekennzeichnet, daß die Umrisse (7, 30, 31, 34, 35, 130, 131, 207) identisch von einem Zellenrohling (15, 115) zum anderen sind.

3. Verfahren gemäß einem der Ansprüche 1 und 2, dadurch gekennzeichnet, daß die Tiefe (h₄) identisch von einem Zellenrohling (15, 115) zum anderen ist.

4. Verfahren gemäß einem der Ansprüche 1 bis 3, dadurch gekennzeichnet, daß die Umrisse (7, 30, 31, 34, 35, 207) kreisförmig sind, und daß der Grund (27) die Form einer im wesentlichen sphärischen Kalotte darstellt, die auf der Achse (26) zentriert ist.

5. Verfahren gemäß einem der Ansprüche 1 bis 3, dadurch gekennzeichnet, daß die Umrisse (130, 131) polygonal sind, und daß der Grund (127) die Form einer Pyramide darstellt, die achsig auf der Achse (126) ist.

6. Verfahren gemäß einem der Ansprüche 1 bis 5, dadurch gekennzeichnet, daß das Entfernen des Materials durch ein Schleifverfahren realisiert wird, das aus einer Gruppe gewählt wird, die schleifen, schmiergeln und polieren einschließt.

7. Verfahren zur Herstellung eines halbfertigen metallischen Produkte (10, 16) zur Herstellung eines Golfschlägerkopfes gemäß dem Verfahren gemäß einem der Ansprüche 1 bis 6, das zumindest einen Rohling der Fläche (13, 113) aufweist, der mit Zellenrohlingen (15, 115) versehen ist, dadurch gekennzeichnet, daß jeder Zellenrohling (15, 115) durch ein unechtes Loch (25, 125) gebildet ist, das einen konkaven Grund (27, 127) und eine Zone (29, 33, 129), die im wesentlichen zylindrisch mit einer Achse (26, 126), die lokal im wesentlichen senkrecht zu dem Rohling der Fläche (13, 113) ist, darstellt, wobei der Grund (27, 127) und die Zone (29, 33, 129) im wesentlichen einen jeweiligen Umriß (30, 31, 34, 35, 130, 131) senkrecht zur Achse (26, 126) aufweist, und wobei die Zone (29, 33, 129), die den Grund (27, 127) mit dem Rohling der Fläche (13, 113) verbindet und folgend der Achse (26, 126) eine Tiefe (h₄) darstellt, die im wesentlichen gleich einer maximalen jeweiligen wahrscheinlichen Tiefe der Bearbeitung des Rohlings der Fläche (13, 113) durch Entfernen von Material ist.

8. Verfahren nach Anspruch 7, dadurch gekennzeichnet, daß die Umrisse (30, 31, 34, 35, 130, 131) identisch von einem Zellenrohling (15, 115) zum anderen sind.

9. Verfahren gemäß einem der Ansprüche 7 und 8, dadurch gekennzeichnet, daß die Tiefe (h₄) identisch von einem Zellenrohling (15, 115) zum anderen ist.

10. Verfahren gemäß einem der Ansprüche 7 bis 9, dadurch gekennzeichnet, daß die Umrisse (30, 31, 34, 35) kreisförmig sind, und daß der Grund (27) die Form einer im wesentlichen sphärischen Kalotte darstellt, die auf der Achse (26) zentriert ist.

11. Verfahren gemäß einem der Ansprüche 7 bis 9, dadurch gekennzeichnet, daß die Umrisse (130, 131) polygonal sind, und daß der Grund (127) die Form einer Pyramide darstellt, die auf der Achse (126) achsig angeordnet ist.
